# NEUE EUROPÄISCHE PATENTSCHRIFT

(11) **EP 1 547 976 B2**
(45) Veröffentlichungstag und Bekanntmachung des Hinweises auf die Entscheidung über den Einspruch: **19.06.2013**
(45) Hinweis auf die Patenterteilung: 07.04.2010
(21) Anmeldenummer: 04029848.1
(22) Anmeldetag: 16.12.2004
(51) Int. Cl.: C01B 33/14, C09C 3/00, C09C 1/40, C09C 1/30

(54) **Wässrige Dispersion, die mindestens 2 chemisch verschiedene Arten von Partikeln enthält**
Aqueous dispersion containing at least 2 chemically different sorts of particles
Dispersion aqueuse comprenant au moins 2 types chemiques differents de particules

(30) Priorität: 22.12.2003 DE 10360464
(43) Veröffentlichungstag der Anmeldung: 29.06.2005
(73) Patentinhaber: Wacker Chemie AG, 81737 München (DE)
(72) Erfinder: Barthel, Herbert, Dr., 84547 Emmerting (DE); Doppelberger, Johann, Dr., 84547 Emmerting (DE); Heinemann, Mario, Dr., 84489 Burghausen (DE); Gottschalk-Gaudig, Torsten, Dr., 84489 Burghausen (DE); Loskot, Stephan, Dr., 84556 Kastl (DE); Völkel, Ute, 84489 Burghausen (DE)
(74) Vertreter: Gössmann, Christoph Tassilo

(56) Entgegenhaltungen:
- EP-A2- 0 340 583
- EP-B1- 0 340 583
- WO-A1-00/20221
- WO-A1-01/17902
- WO-A1-01/17902
- WO-A1-2004/050377
- WO-A1-2004/050377
- US-A- 5 134 100
- US-A- 5 134 100
- US-A- 5 554 215
- US-A- 5 554 215
- US-B1- 6 284 819
- GRUNDLAGEN VON AEROSIL: 'Degussa AG' SCHRIFTENREIHE PIGMENTE Nr. 11, Juni 1993,
- EVONIK INDUSTRIES: 'Aerosil COK 84' PRODUKTINFORMATION

## Beschreibung

Die Erfindung betrifft eine Dispersion.

Bekannt ist aus der Schrift der Cabot EP 1 124 693 A1 die Stabilisierung von wäßrigen Kieselsäuredispersionen mit Aluminiumsalzen für den Einsatz zur Beschichtung von Druckmedien, z.B. Papier.
Erhalten werden kationische Dispersionen mit positivem Zetapotential.
Nachteilig ist der hohe Elektrolyt- oder Salzgehalt.

Andere bekannte Verfahren zur Stabilisierung von Kieselsäure-Dispersionen sind der Zusatz von Alkali und das Einstellen eines hohen pH-Wertes mit KOH oder NaOH.
Nachteilig ist hier der hohe Elektrolyt- oder Salzgehalt, sowie die Alkalität.

Aufgabe der Erfindung ist es, die Nachteile des Standes der Technik zu überwinden.

Gegenstand der Erfindung ist eine wäßrige Dispersion, nach Anspruch 1.

Bevorzugt weisen die erfindungsgemäß eingesetzten Partikel der Partikelarten einen mittleren Durchmesser größer 1 nm, vorzugsweise von 1 nm bis 100 µm, besonders bevorzugt von 10 nm bis 10 µm, insbesondere von 50 nm bis 1000 nm, speziell ausgewählt von 50 nm bis 250 nm, auf.

Bei der erfindungsgemäß eingesetzten zumindest zwei chemisch verschiedenen Partikelarten handelt es sich um bei Raumtemperatur und dem Druck der umgebenden Atmosphäre, also zwischen 900 und 1100 hPa, feste Partikel.

Die Partikel sind unlöslich oder schwerlöslich in Wasser.
Die Partikel der erfindungsgemäß eingesetzten Partikelarten weisen bevorzugt eine Löslichkeit in Wasser bei pH 7,33 und einem Elektrolythintergrund von 0,11 Mol/l und einer Temperatur von 37°C von kleiner 0,1 g/l, besonders bevorzugt von kleiner als 0,05 g/l, auf, bei dem Druck der umgebenden Atmosphäre, also zwischen 900 und 1100 hPa.

Bevorzugt weisen die erfindungsgemäß eingesetzten Partikel der Partikelarten eine Molmasse größer 10 000 g/Mol, besonders bevorzugt eine Molmasse von 50 000 bis 100 000 000 g/Mol, insbesondere von 100 000 bis 10 000 000 g/Mol, auf, jeweils gemessen bevorzugt mittels statischer Lichtstreuung.

Bevorzugt weisen die erfindungsgemäß eingesetzten Partikel der Partikelarten eine spezifische BET-Oberfläche von 1 bis 500 m²/g, besonders bevorzugt 20 bis 300 m²/g, auf. Die BET-Oberfläche wird nach bekannten Verfahren gemessen, bevorzugt gemäß Deutscher Industrie Norm DIN 66131 und DIN 66132.

Bevorzugt weisen die erfindungsgemäß eingesetzten Partikel der Partikelarten einen Kohlenstoffgehalt von kleiner 50 Gewichtsprozent auf.

Die chemisch verschiedenen Partikelarten haben verschiedene chemische Zusammensetzungen.

Bevorzugt unterscheiden sich die chemisch verschiedenen Partikelarten bei der Elementzusammensetzung durch mindestens > 0,1 Gew.%, bevorzugt durch > 0,5 Gew.%, insbesondere durch 1 Gew.%, besonders bevorzugt durch 5 Gew.%, ganz besonders bevorzugt durch 25 Gew.% ihrer chemischen Zusammensetzung, gemessen als elementare Zusammensetzung.

Die Partikel haben bevorzugt eine Mohs'sche Härte gleich oder größer 1.
Besonders bevorzugt weisen die erfindungsgemäß eingesetzten Partikel der Partikelarten eine Mohs Härte größer als 4 auf.

Die Partikel zeigen in wäßriger Dispersion bei gleichem pH-Wert unterschiedliche ZETA-Potentiale, gemessen als einzige Partikelfraktion.

Die Partikel zeigen in wäßriger Dispersion unterschiedliche isoelektrische Punkte, also pH-Wert-Bereiche, an denen das ZETA-Potential Null ist, gemessen als einzige Partikelart. Bei den Partikeln unterscheiden sich vorzugsweise zumindest die isoelektrischen Punkte von zwei Partikelarten um mindestens eine halbe pH-Einheit.
Bevorzugt ist die Differenz der isoelektrischen Punkte von zwei chemisch verschiedenen Partikelarten größer als 0,5 pH-Einheiten, besonders bevorzugt größer als 1 pH-Einheit, besonders bevorzugt größer 2,5 pH-Einheiten, ganz besonders bevorzugt größer als 4 pH-Einheiten.

Die zumindest zwei chemisch verschiedenen Partikelarten der Dispersion, wobei es auch vorzugsweise mehr als zwei Partikelarten sein können, bevorzugt bis zu 10 Partikelarten, besonders bevorzugt bis zu 5 Partikelarten, ganz besonders bevorzugt 3 Partikelarten, sein können, wovon eine Partikelart Kieselsäure und als zumindest zweite Partikelart aus organischen Harzen, wie Siliconharze, z.B. Methylsiliconharze, wie Epoxidharze, wie Acrylharze, z.B. Polymethylmethacrylate; sowie Polymere, wie Polyolefine, z.B. Polystyrol; sowie Metallkolloide, z.B. Silbercolloide; sowie Metalloxide, z.B. Oxide der III. Hauptgruppe, wie Aluminiumoxide, der IV. Hauptgruppe, wie Germaniumoxid, und V. Hauptgruppe, und z.B. Oxide der Nebengruppenmetalle, wie Titan(IV)dioxide, wie Zirkon(IV)oxide, wie Zinkoxide, und z.B. Oxide der Lanthaniden, wie Cer(IV)oxide; sowie beliebige Mischungen aus diesen Oxiden, wie Siliciumdioxid-Aluminiumoxid-Mischoxide mit beliebiger Zusammensetzung, bevorzugt mit einem Gehalt an 20 bis kleiner 100 Gew.% Siliciumdioxid, wie Siliciumdioxid-Eisen(III)oxid-Mischoxide mit beliebiger Zusammensetzung, bevorzugt mit einem Gehalt an 20 bis kleiner 100 Gew.% Siliciumdioxid, wie Siliciumdioxid-Titan(IV)oxid-Mischoxide mit beliebiger Zusammensetzung, bevorzugt mit einem Gehalt an 20 bis kleiner 100 Gew.% Siliciumdioxid; sowie unlösliche oder schwerlösliche ionische und mineralische Verbindungen, z.B. Calciumcarbonate, Bariumsulfate, Eisen(II)sulfide, wie Pyrite, Calciumsilikate, Aluminiumsilikate, wie Aluminiumschichtsilikate, z.B. Tone, wie Bentonite, Montmorillonite und Hektorite, die auch organisch modifiziert sein können; sowie mikronisierte Mineralien und Gesteinsmehle; sowie schwerlösliche nichtionische Verbindungen, wie Bornitride, Siliciumnitride oder Silicumcarbide, ausgewählt werden.

Bevorzugt sind Metalloxyde mit spezifischen Oberflächen nach BET von größer als 10 m²/gr, wie in Hochtemperaturprozessen hergestellte Metalloxide, wie in Flammenprozessen hergestellte pyrogene Metalloxide, wie in Plasmaverfahren hergestellte Metalloxide, wie in Heißwandreaktoren hergestellte Metalloxide und durch Laserverfahren hergestellte Metalloxide.

Bevorzugt sind Kieselsäuren mit spezifischen Oberflächen nach BET von größer als 10 m²/gr, besonders bevorzugt synthetische hergestellte pyrogene Kieselsäuren, wie in Plasmaverfahren hergestellte Siliciumdioxide, wie in Heißwandreaktoren hergestellte Siliciumdioxide, wie in Laserverfahren hergestellte Siliciumdioxide, besonders bevorzugt pyrogene Kieselsäure hergestellt bei bevorzugten Temperaturen von über 1000 °C.

Partikelarten der Dispersion können auch aus beliebigen Mischungen der oben angegebenen Partikelarten ausgewählt werden.

Bevorzugt ist, dass die Dispersion zumindest zwei Partikelarten enthält, wobei auf der einen Seite jeweils Kieselsäure und auf der anderen Seite jeweils eine Partikelart aus der Gruppe Aluminiumoxid, Boroxid, Zirkonoxid, Titanoxid, Zinkoxid, Ceroxid und Eisenoxid ausgewählt werden kann, wobei auch mehrere Partikelarten aus dieser Gruppe enthalten sein können.

Besonders bevorzugt ist, dass zumindest eine zweite Partikelart Metalloxid ist, wie Aluminiumoxide, Zirkonoxide und Titandioxide, wie z.B. nasschemisch hergestellte Metalloxide, wie in Flammenprozessen hergestellte pyrogene Metalloxide, wie in Plasmaverfahren hergestellte Metalloxide, wie in Heißwandreaktoren hergestellte Metalloxide, wie in Laserverfahren hergestellte Metalloxide, besonders bevorzugt pyrogene Aluminiumoxide, Zirkonoxide und Titandioxide.

Die chemisch verschiedenen Partikelarten haben vorzugsweise eine mittlere Primärteilchen-Partikelgröße d-PP von 0,5 bis 1000 nm, bevorzugt 5 bis 100 nm, besonders bevorzugt 5 bis 50 nm.
Geeignete Messverfahren hierzu sind zum Beispiel die Bestimmung der BET-Oberflächen und der Material-Dichte: d-PP = 6 / (BET * Material-Dichte); zum Beispiel die Transmissions-Elektronenmikroskopie oder Hochauflösende Rasterelektronenmikroskopie, z.B. im Feldemissionsmodus, zum Beispiel die Ultraschallspektroskopie im Mess-Bereich 1 bis 100 MHz.

Die chemisch verschiedenen Partikelarten haben vorzugsweise eine mittlere Sekundärstruktur- oder Aggregates-Partikelgröße d-Aggr von 50 bis 5000 nm, bevorzugt 100 bis 500 nm, gemessen als hydrodynamischer Durchmesser.
Geeignete Messverfahren hierzu sind zum Beispiel die dynamische Lichtstreuung oder Photokorrelationsspektroskopie; zur Messung von Konzentrationen >0,01 Gew.% Feststoff kann sie als Rückstreuung ausgeführt bzw. mittels Kreuzkorrelation gegen Mehrfachstreuung korrigiert werden.

Die Partikelarten haben vorzugsweise eine mittlere Tertiär- oder Agglomerats-Partikelgröße d-Aggl von >100 nm, gemessen als geometrischer Durchmesser.
Geeignete Messverfahren hierzu sind zum Beispiel die Laser-Lichtbeugung.

Vorzugsweise weisen die Partikelarten eine spezifische Oberfläche von 1 bis 1000 m²/g, bevorzugt 10 bis 500 m²/g, ganz besonders bevorzugt von 100 bis 300 m²/g (gemessen nach der BET Methode nach DIN 66131 und 66132), auf.

Vorzugsweise weisen die Partikelarten eine fraktale Dimension der Oberfläche Dₛ von vorzugsweise kleiner oder gleich 2,3 auf, bevorzugt von kleiner oder gleich 2,1, besonders bevorzugt von 1,95 bis 2,05, wobei die fraktale Dimension der Oberfläche Dₛ hierbei definiert ist als:
Partikel-Oberfläche ist proportional zum Partikel-Radius R hoch Dₛ.

Vorzugsweise weisen die Partikelarten eine fraktale Dimension der Masse Dₘ von vorzugsweise kleiner oder gleich 2,8, bevorzugt gleich oder kleiner 2,7, besonders bevorzugt von 2,4 bis 2,6 auf. Die fraktale Dimension der Masse Dₘ ist hierbei definiert als:
Partikel-Masse ist proportional zum Partikel-Radius R hoch Dₘ.

Die spezifischen Oberflächen nach BET der Partikelarten können gleich oder verschieden sein, bevorzugt sind sie verschieden, besonders bevorzugt ist die spezifische Oberfläche von mindestens einer Partikelart um den Faktor 2 größer als die von einer anderen Partikelart.

Die mittleren Partikelgrößen der Partikelarten können gleich oder verschieden sein, bevorzugt sind sie verschieden, besonders bevorzugt ist die mittlere Partikelgröße von mindestens einer Partikelart um den Faktor 2 kleiner als die von einer anderen Partikelart, ganz besonders bevorzugt um den Faktor 5 kleiner.

Es können auch hydrophile Kieselsäuren eingesetzt werden, die frisch hergestellt sind und z.B. direkt aus der Flamme kommen, solche die zwischengelagert oder bereits handelsüblich verpackt sind. Es können auch hydrophobierte oder silylierte Kieselsäuren, z.B. handelsübliche, eingesetzt werden.

Es können unverdichtete, mit Schüttdichten kleiner 60 g/l, aber auch verdichtete, mit Schüttdichten größer 60 g/l, Kieselsäuren eingesetzt werden.

Es können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlichem Hydrophobier- oder Silyliergrad.

In einer bevorzugten Ausführung sind die zumindest zwei Partikelarten auf der einen Seite jeweils hydrophile Metalloxide und auf der anderen Seite jeweils Partikelarten, die aus den Oberflächen-modifizierten Metalloxiden ausgewählt werden, wobei die Oberflächen-modifizierten Metalloxide bevorzugt silylierte, mit Organosiliciumverbindungen modifizierte Metalloxide, besonders bevorzugt silylierte pyrogene Metalloxide, sind.

In einer besonders bevorzugten Ausführung sind die zumindest zwei Partikelarten auf der einen Seite jeweils hydrophile Kieselsäure und auf der anderen Seite jeweils Partikelarten, die aus den Oberflächen-modifizierten Kieselsäuren ausgewählt werden, wobei die Oberflächen-modifizierten Kieselsäuren bevorzugt silylierte, mit Organosiliciumverbindungen modifizierte Kieselsäuren, besonders bevorzugt silylierte pyrogene Kieselsäuren, sind.

Bevorzugt können zur Silylierung von Partikeln Organosiliciumverbindungen, wie z.B.
(i) Organosilane bzw. Organosilazane der Formel

   R¹ _{d}SiY_{4-d} (I)

   und/oder deren Teilhydrolysate,
   wobei
   R¹ gleich oder verschieden sein kann und einen einwertigen, gegebenenfalls substituierten Kohlenwasserstoffrest mit 1 bis 24 Kohlenstoff-Atomen, der durch Sauerstoffatome unterbrochen sein kann, bedeutet,
   d gleich 1, 2 oder 3 bedeutet und
   Y gleich oder verschieden sein kann und Halogenatom, einwertige Si-N-gebundene Stickstoffreste, an den ein weiterer Silylrest gebunden sein kann, -OR² oder -OC(O)OR² bedeutet, wobei R² gleich Wasserstoffatom oder ein einwertiger, gegebenenfalls substituierter Kohlenwasserstoffrest mit 1-8 Kohlenstoffatomen, der durch Sauerstoffatome unterbrochen sein kann, bedeutet, oder
(ii) lineare, verzweigte oder cyclische Organosiloxane aus Einheiten der Formel

   R³ ₑ(OR⁴)_{f}SiO_{(4-e-f)/2} (II),
wobei
R³ gleich oder verschieden sein kann und eine der oben für R¹ angegebenen Bedeutungen hat,
R⁴ gleich oder verschieden sein kann und eine für R² angegebene Bedeutung hat,
e 0, 1, 2 oder 3 ist und
f 0, 1, 2, 3 ist, mit der Maßgabe dass die Summe e+f ≤ 3 ist, oder
Gemische aus (i) und (ii)
eingesetzt werden.

Bei den Organosiliciumverbindungen, die zur Silylierung der Feststoffpartikel eingesetzt werden können, kann es sich beispielsweise um Gemische aus Silanen oder Silazanen der Formel (I) handeln, wobei solche aus Methyl-Chlorsilanen einerseits oder Alkoxysilanen und gegebenenfalls Disilazanen andererseits bevorzugt sind.

Beispiele für R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha - und der beta -Phenylethylrest.

Beispiele für substituierte Kohlenwasserstoffreste R sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest, der 3-(Cyclohexylamino)propylrest, der Aminomethylrest, der Cyclohexylaminomethylrest und der Diethylaminomethylrest; etherfunktionelle Reste, wie der 3-Methoxypropylrest, der Methoxymethylrest, der 3-Ethoxypropylrest und der Acetoxymethylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt sind der Methyl-, Octyl- und Vinylrest, besonders bevorzugt der Methylrest.

Bei R² handelt es sich bevorzugt um den Methyl- und Ethylrest.

Beispiele für Organosilane der Formel (I) sind Alkylchlorsilane, wie Methyltrichlorsilan, Dimethyldichlorsilan, Trimethylchlorsilan, Octylmethyldichlorsilan, Octyltrichlorsilan, Octadecylmethyldichlorsilan und Octadecyltrichlorsilan, Methylmethoxysilane, wie Methyltrimethoxysilan, Dimethyldimethoxysilan und Trimethylmethoxysilan, Methylethoxysilane, wie Methyltriethoxysilan, Dimethyldiethoxysilan und Trimethylethoxysilan, Methylacetoxysilane, wie Methyltriacetoxysilan, Dimethyldiacetoxysilan und Trimethylacetoxysilan, Vinylsilane, wie Vinyltrichlorsilan, Vinlymethyldichlorsilan, Vinyldimethylchlorsilan, Vinyltrimethoxysilan, Vinlymethyldimethoxysilan, Vinyldimethylmethoxysilan, Vinyltriethoxysilan, Vinylmethyldiethoxysilan und Vinyldimethylethoxysilan, Disilazane wie Hexamethyldisilazan, Divinyltetramethyldisilazan und Bis(3,3-trifluorpropyl)tetramethyldisilazan, Cyclosilazane wie Octamethylcyclotetrasilazan, und Silanole wie Trimethylsilanol.

Bevorzugt ist Methyltrichlorsilan, Dimethyldichlorsilan und Trimethylchlorsilan oder Hexamethyldisilazan.

Beispiele für Organosiloxane der Formel (II) sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacetoxysiloxy-, Methyldiacetoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 2 bis 100 mPas.

Weitere Beispiele für Organosiloxane sind Siliconharze, im besonderen solche, die als Alkylgruppe Methylgruppen enthalten, wobei es sich besonders bevorzugt um solche handelt, die R¹₃SiO_{1/2} und SiO_{4/2}-Einheiten enthalten oder solche, die R¹SiO_{3/2} und gegebenenfalls R¹₂SiO_{2/2}-Einheiten enthalten, wobei R¹ eine der oben genannten Bedeutungen hat.

Bevorzugt haben die genannten Siliconharze aus Einheiten der Formel (III) eine Viskosität bei 25°C von 500 bis 5000 mm²/s.

Bei Siliconharzen mit einer Viskosität von größer als 1000 mm²/s bei 25°C sind solche bevorzugt, die sich in einem technisch gut handhabbaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Aromaten wie Toluol oder Xylol, mit einer Konzentration über 10 Gew.-% und einer Mischungsviskosität kleiner als 1000 mm²/s bei einer Temperatur von 25°C und dem Druck der umgebenden Atmosphäre lösen lassen.

Unter den festen Organosiloxanen sind solche bevorzugt, die sich in einem technisch handhabbaren Lösungsmittel (wie oben definiert) mit einer Konzentration größer als 10 Gew.% und einer Mischungsviskosität kleiner als 1000 mm²/s bei einer Temperatur von 25°C lösen.

Bei den zur Herstellung der erfindungsgemäß eingesetzten silylierten Kieselsäuren verwendeten Stoffen kann es sich jeweils um eine einzelne Art wie auch um ein Gemisch aus mindestens zwei Arten derartiger Stoffe handeln.

Ein bevorzugtes Verfahren zur Herstellung der erfindungsgemäß eingesetzten silylierten Kieselsäuren soll im Folgenden anhand des bevorzugten Ausgangsprodukts Kieselsäure beschrieben werden, wobei pyrogene Kieselsäuren besonders bevorzugt eingesetzt werden.

Die Hydrophobierung und Silylierung, die zur Herstellung der erfindungsgemäß eingesetzten Kieselsäuren bevorzugt durchgeführt wird, kann als diskontinuierliche Reaktion, d.h. im Batch-Verfahren, oder als kontinuierliche Reaktion durchgeführt werden, wobei die kontinuierliche Reaktion bevorzugt ist.

Die Hydrophobierung und Silylierung kann in einem Schritt realisiert werden oder in 2 oder 3 aufeinanderfolgenden Schritten. Das heißt, der Reaktion kann eine Beladung (Physosorption des Silyliermittels) vorgeschaltet sowie der Reaktion vorzugsweise ein Reinigungsschritt nachgeschaltet sein. Bevorzugt sind 3 sukzessive Schritte: (1) Beladung - (2) Reaktion - (3) Reinigung.

Die Beladungstemperatur liegt bei vorzugsweise -30 bis 350°C, bevorzugt 20 bis 120°C.

Die Reaktionstemperaturen reichen vorzugsweise von 50 bis 400°C, besonders bevorzugt von 50 bis 330°C.

Die Reaktionszeiten dauern vorzugsweise von 1 Minute bis 24 Stunden, bevorzugt 30 Minuten bis 4 Stunden.

Der Reaktionsdruck liegt vorzugsweise im Bereich Normaldruck, d.h. zwischen 900 und 1100 hPa.

Die Reinigungstemperatur reicht vorzugsweise von 100 bis 400°C.

Eine effektive Bewegung und Durchmischung von Kieselsäure und Silyliermittel während Schritte (1) Beladung, (2) Reaktion und Reinigung (3) ist notwendig. Dies erfolgt bevorzugt durch mechanische oder gasgetragene Fluidisierung. Eine gasgetragene Fluidisierung kann durch alle inerten Gase erfolgen, die nicht zu Nebenreaktionen, Abbaureaktionen, Oxidationsvorgängen und Flammen- und Explosionserscheinungen führen. Die Leerrohrgasgeschwindigkeit liegt hierbei bei 0,05 bis 5 cm/s, besonders bevorzugt bei 0,05 bis 1 cm/s. Mechanische Fluidisierung kann durch Flügelrührer, Ankerrührer und sonstige geeignete Rührorgane erfolgen.

In einer besonders bevorzugten Ausführung wird nur die Gasmenge zugeführt, die zur Aufrechterhaltung einer sauerstoffarmen Atmosphäre ausreicht, bevorzugt weniger als 5 Vol.-%, die Fluidisierung erfolgt dann rein mechanisch.

Die Reaktion wird bevorzugt in einer Atmosphäre durchgeführt, die nicht zur Oxidation der silylierten Kieselsäure führt, d.h. bevorzugt weniger als 10 Vol.-% Sauerstoff, besonders bevorzugt sind weniger als 2,5 Vol.-%, wobei beste Ergebnisse bei weniger als 1 Vol.-% Sauerstoff erzielt werden.

Es erfolgt ein effektives Einbringen der Silyliermittel in die Kieselsäure. Handelt es sich bei den Silyliermitteln bei Applikationstemperatur um flüssige Verbindungen, werden bevorzugt effektive Verdüsungstechniken eingesetzt. Verdüsen in 1-Stoffdüsen unter Druck (5 bis 20 bar), Versprühen in 2-Stoffdüsen unter Druck (Gas und Flüssigkeit 2 bis 20 bar), Feinstverteilen mit Atomizern, etc.

Bevorzugt wird das Silyliermittel als feinstverteiltes Aerosol zugefügt, wobei das Aerosol eine Sinkgeschwindigkeit von vorzugsweise 0,1 bis 20 cm/s und eine Tropfengröße mit einem aerodynamischen Äquivalentdurchmesser von 5 bis 25 µm aufweist.

Wahlweise können vorzugsweise protische Lösemittel hinzugefügt werden, wie flüssige oder verdampfbare Alkohole oder Wasser; typische Alkohole sind iso-Propanol, Ethanol und Methanol. Es können auch Gemische der oben genannten protischen Lösemittel zugefügt werden. Bevorzugt werden keine protischen Lösemittel zugesetzt.

Wahlweise können vorzugsweise saure oder basische Katalysatoren zugesetzt werden. Diese Katalysatoren können basischen Charakters sein, im Sinne einer Lewis Base oder einer Brönsted Base, wie Ammoniak, oder sauren Charakters sein, im Sinne einer Lewis Säure oder einer Brönsted Säure, wie Chlorwasserstoff. Falls Katalysatoren eingesetzt werden, handelt es sich bevorzugt um Spuren, d.h weniger als 1000 ppm. Besonders bevorzugt werden keine Katalysatoren zugesetzt.

Der Reinigungsschritt ist durch eine Bewegung gekennzeichnet,
wobei eine langsame Bewegung und ein geringes Durchmischen bevorzugt ist.

Der Reinigungsschritt ist weiterhin durch einen erhöhten Gaseintrag gekennzeichnet, entsprechend einer Leerrohrgasgeschwindigkeit von 0,001 bis 10 cm/s.

Zusätzlich kann der Reinigungsschritt ein Mischen mit mechanischen Rührorganen beinhalten. Die Rührorgane werden dabei so eingestellt und bewegt, dass bevorzugt Mischen und Fluidisieren, jedoch nicht völlige Verwirbelung eintritt.

Zusätzlich können während des Silylierschrittes Verfahren zur mechanischen Verdichtung eingesetzt werden, wie zum Beispiel Presswalzen, Kugelmühlen, Kollergänge, Schraubenverdichter und Brikettierer.

Zusätzlich können vor, während oder nach des Silylierungsschrittes Verfahren zur Desagglomerierung der Kieselsäure eingesetzt werden, wie Stiftmühlen oder Vorrichtungen zur Mahlsichtung und/oder Verfahren zur mechanischen Verdichtung der Kieselsäure, wie zum Beispiel Presswalzen, oder Verdichten durch Absaugen des Luft- oder Gasinhaltes durch geeignete Vakuummethoden oder andere Verfahren zur mechanischen Verdichtung wie zum Beispiel Presswalzen, Kugelmühlen, Kollergänge, Schraubenverdichter und Brikettierer.

Bevorzugt weisen die erfindungsgemäß eingesetzten silylierten Kieselsäuren eine BET-Oberfläche von 170 bis 230 m²/g und einen Kohlenstoffgehalt von 0,1 bis 3 Gewichtsprozent, vorzugsweise von 0,1 bis 1,5 Gewichtsprozent, insbesondere von 0,1 bis 1 Gewichtsprozent, ganz besonders bevorzugt von 0,1 bis 0,7 Gewichtsprozent, auf, jeweils bestimmbar bevorzugt durch Elementaranalyse.

Werden als Partikelarten hydrophobe und hochhydrophobe Kieselsäure eingesetzt, so werden aus Gründen der Benetzbarkeit, Flüssigkeit mit einer Oberflächenspannung geringer als die von Wasser, also < 72,5 mN/m, eingesetzt, z.B. Mischungen von Wasser mit einem Alkohol, wie Methanol, Ethanol, Iso-Propanol.

Die erfindungsgemäßen Dispersionen enthalten eine Kieselsäure, bevorzugt pyrogene Kieselsäure in einer Menge von größer 50 Gew.% bezogen auf den Festgehalt der Dispersion, bevorzugt ist zumindest eine weitere oder auch mehrere Partikelarten in einer Menge von vorzugsweise 0,1 - 5 Gew.%, besonders bevorzugt 0,2 - 2 Gew.% eingesetzt, bezogen auf den Festgehalt der Dispersion.

Die erfindungsgemäßen wäßrigen Dispersionen können gegebenenfalls andere Additive, wie z.B. Mineralsäuren, wie Phosphorsäure, oder organische Säuren, wie Apfelsäure, Zitronensäure oder Propionsäure, oder anorganische Basen, wie Kaliumhydroxid oder Natriumhydroxid oder Ammoniak, oder organische Basen, wie Triethanolamin, oder Polymere, wie Polyethylenglykol, Polypropylenglykol, oder Tenside, wie anionische Tenside, wie Dodecylsulfonsäure, oder kationische Tenside, wie Cetylpyridinium Chlorid, oder neutrale Tenside, wie Triton X100, Polyelektrolyte, wie Polycarbonsäuren und deren Salze oder Polyacrylsäuren und deren Salze oder Polydiallyldimethylammonium Chloride enthalten.

Bevorzugt ist der Gehalt der erfindungsgemäßen wäßrigen Dispersion an organischen Additiven kleiner als 5 Gew.%, bevorzugt kleiner als 1 Gew.%, besonders bevorzugt kleiner als 0,1 Gew.%, ganz besonders bevorzugt kleiner als 0,01 Gew.%, bezogen auf die gesamte Dispersion. Ganz besonders bevorzugt werden der erfindungsgemäßen Dispersion keine organischen Additive zugefügt. Ganz besonders bevorzugt enthält die erfindungsgemäße Dispersion keine messbaren organischen Additive.

Bevorzugt ist der Gehalt der erfindungsgemäßen wäßrigen Dispersion an organischen und anorganischen Salzen oder Elektrolyten, wie zum Beispiel HCl, NaCl, KCl, Fe(III)Cl₃, AlCl₃, Al₂(SO₄)₃ oder Na₂SO₄ kleiner als 5 Gew.%, bevorzugt kleiner als 1 Gew.%, besonders bevorzugt kleiner als 0,1 Gew.%, ganz besonders bevorzugt kleiner als 0,01 Gew%.
Ganz besonders bevorzugt werden der erfindungsgemäßen Dispersion keine organischen und anorganischen Salze zugefügt. Ganz besonders bevorzugt enthält die erfindungsgemäße Dispersion keine messbaren organischen und anorganischen Salze.

Die Leitfähigkeit der erfindungsgemäßen wäßrigen Dispersion ist kleiner als 100 mS/cm, bevorzugt kleiner 10 mS/cm, besonders bevorzugt kleiner als 1 mS/cm, im Besonderen kleiner als 0,1 mS/cm, am Besten kleiner 0,01 mS/cm, ganz besonders bevorzugt kleiner 0,005 mS/cm.

Die fluide Phase der Dispersion sind Flüssigkeiten, bevorzugt solche, die niederviskos sind, bevorzugt solche mit Viskositäten kleiner 100 mPas bei 25°C, wie vorzugsweise Wasser, und andere polare protische flüssige Medien, sowie Alkohole, wie Methanol, Ethanol, Isopropanol; wie Di- und Polyole; wie Glykole, wie Ethylenglykol, Propylenglykol, Polyglykole, wie flüssige Polyethylenglykole und Polypropylenglykole, oder Glycerin; sowie polare nicht protische flüssige Medien, wie Ether, wie Tetrahydrofuran, Ketone wie Aceton, Isobutylketon, Estern, wie Essigsäureethylester, Amide, wie Formamide, wie Dimethylformamid, wie Sulfoxide, wie Dimethylsulfoxid; sowie unpolare flüssige Medien wie Alkane, wie Cyclohexan, oder Aromaten, wie Toluol, sowie deren homogenen Gemische. Besonders bevorzugt ist Wasser.

Die erfindungsgemäße Dispersion enthält vorzugsweise die oben genannten Metalloxide.

Kieselsäuredispersionen, können hergestellt dadurch werden, dass Wasser und zumindest eine chemisch von der Kieselsäure verschiedene Partikelart vorgelegt wird und dann unter Anwendung von Scherenergie die Kieselsäure zugefügt wird.

Die Partikelarten können zur Herstellung der erfindungsgemäßen Dispersionen in die Flüssigkeit zugegeben werden und werden durch Benetzung verteilt, oder durch Schütteln, wie mit einem Taumelmischer, oder einem High Speed Mixer, oder durch Rühren. Bei geringen Partikelkonzentrationen reicht im allgemeinen einfaches Rühren zur Einarbeitung der Partikel in die Flüssigkeit. Bevorzugt vor allem bei hohen Partikelkonzentrationen ist das Einarbeiten und Dispergieren der Partikel in die Flüssigkeit bei sehr hohem Schergefälle. Das Dispergieren kann in üblichen, zur Herstellung von Emulsionen bzw. Dispersionen geeigneten Mischgeräten, die einen ausreichend hohen Eintrag von Scherenergie leisten, wie beispielsweise schnellaufende Stator-Rotor-Rührgeräte, wie z.B. nach Prof. P. Willems, bekannt unter dem registrierten Warenzeichen "Ultra-Turrax", oder anderen Stator-Rotor-Systemen, bekannt unter dem registrierten Warenzeichen wie Kady, Unimix, Koruma, Cavitron, Sonotron, Netzsch oder Ystral, erfolgen. Andere Verfahren sind Kugelmühlen, wie z.B. Dyno-Mill von WAB, CH. Weitere Verfahren sind schnelllaufende Rührer, wie Flügelrührer oder Balkenrührer, Dissolver, z.B. mit Umlaufgeschwindigkeiten von 1-50 m/s, wie Scheibendissolver z.B. der Firma Getzmann, oder Mischsysteme wie Planetendissolver, Balkendissolver oder andere kombinierte Aggregate aus Dissolver- und Rührersystemen. Andere geeignete Systeme sind Extruder oder Kneter.

Dies kann in diskontinuierlichen und in kontinuierlichen Verfahren erfolgen.

Im besonderen geeignet sind Systeme, die zunächst mit effektiven Rührorganen die Benetzung und Einarbeitung der Kieselsäure in die Flüssigkeit erzielen, z.B. in einem geschlossenen Behältnis oder Kessel, und in einem zweiten Schritt die Kieselsäure bei sehr hohem Schergefälle dispergieren. Dies kann durch ein Dispergiersystem in dem ersten Behältnis geschehen, oder durch Umpumpen in einer externen Rohrleitung, die ein Dispergierorgan enthält, aus dem Behältnis unter bevorzugt geschlossener Rückführung in das Behältnis. Durch eine teilweise Rückführung und teilweise kontinuierliche Entnahme kann dieser Prozess bevorzugt kontinuierlich gestaltet werden.

Insbesondere geeignet ist zur Dispergierung der Kieselsäure in der erfindungsgemäßen Dispersion der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen, geschehen, oder in Durchflußsystemen, die einen oder mehrere Ultraschallgeber enthalten, wie Ultraschallverfahren wie Ultraschall-Finger und Geber, oder Ultraschall-Durchflußzellen, oder Ultraschall-Systemen wie oder analog denen, die von Sonorex /Bandelin angeboten werden.

Ultraschalldispergierung kann kontinuierlich oder diskontinuierlich erfolgen.

Das Verfahren zur Dispergierung von Partikeln in einer Flüssigkeit kann diskontinuierlich wie auch kontinuierlich durchgeführt werden.

Selbstverständlich kann die erfindungsgemässe Dispersion auch auf andere Weise hergestellt werden. Es hat sich jedoch gezeigt, dass die Verfahrensweise kritisch ist und nicht alle Herstellungsarten Dispersionen ergeben.

Die Verfahren haben den Vorteil, dass sie sehr einfach in der Durchführung sind und wäßrige Dispersionen mit sehr hohen Feststoffgehalten hergestellt werden können.

Bei der erfindungsgemäßen Kieselsäure-Dispersion, die Metalloxid enthält, ist Metalloxid gemessen als Metall vorzugsweise in einer Menge von 0,00001 Gew.% bis 8 Gew.% Metall, bevorzugt von 0,0001 Gew.% bis 8 Gew.% Metall, bevorzugt 0,001 bis 5 Gew.%, besonders bevorzugt 0,1 - 5 Gew%, im besonderen bevorzugt 0,5 - 5 Gew.% Metall enthalten, wobei Metall immer als reines Metall in der Metall-haltigen Dispersion berechnet wird, bezogen auf die gesamte Dispersion.

In einer besonderen Ausführung wird als Basis-(Ausgangs-)-Produkt der Oberflächenbehandlung mit einer Metallverbindung eine hydrophile pyrogene Kieselsäure eingesetzt, die unter wasserfreien Bedingungen hergestellt wird. Unter wasserfrei ist hierbei zu verstehen, dass weder im hydrothermalen Herstellungs-Prozess noch in den weiteren Schritten des Prozesses, wie Abkühlung, Reinigung und Lagerung, bis zum fertigen und gereinigten, verpackten und versandfertigen Produkt kein zusätzliches Wasser in den Prozess zugeführt wird, weder in flüssiger noch in dampfförmiger Form. Es wird dabei jedenfalls nicht mehr als 5 Gew.% Wasser bezogen auf das gesamte Gewicht der Kieselsäure zugegeben, vorzugsweise wird so wenig Wasser wie möglich, besonders bevorzugt überhaupt kein Wasser zugegeben.

Es können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlichem Hydrophobier- oder Silyliergrad.

Ein weiterer Gegenstand ist ein Verfahren zur Verwendung der wäßrigen Dispersion zur Verdickung und Verstärkung von wäßrigen Beschichtungssystemen, Klebstoffen, Dichtstoffen und Verbundwerkstoffen, für chemisch mechanisches Planarisieren und Polieren von elektronischen und optischen Bauteilen, für das Beschichten von Papieren und Folien sowie um Komponenten für Korrosionsschutz von Metallen herzustellen.

Eine weitere Anwendung der Erfindung ist eine wäßrige Dispersion geeignet für die Beschichtung von Druckmedien, insbesondere solchen Papieren, die bei berührungsfreien Druckverfahren eingesetzt werden; Beispiele sind Papiere für Ink Jet Printer und im Besonderen solche Papiere mit hohem Glanz.

Eine weitere Anwendung der Erfindung ist ein Druckmedium (recording medium), z.B. ein Papier oder eine Folie, geeignet zum Bedrucken mit Tintenstrahldruckern (Ink Jet Printer), im Besonderen ein Papier mit hohem Glanz, dadurch gekennzeichnet, dass es durch Beschichtung mit der erfindungsgemäßen Dispersion hergestellt wurde.

Eine weitere Anwendung der Erfindung ist eine wäßrige Dispersion geeignet für den Einsatz bei der Beschichtung von Oberflächen, wie mineralische Substrate, wie Metalle, z.B. Stahl oder Eisen, z.B. mit dem Ziel des Korrosionsschutzes.

Eine weitere Anwendung der Erfindung ist eine wäßrige Dispersion geeignet für den Einsatz bei der Herstellung von Farben und Lacken, Kunstharzen, Klebstoffen und Dichtstoffen, insbesondere solchen, die auf wäßriger Basis hergestellt sind.

Eine weitere Anwendung der Erfindung ist eine wäßrige Dispersion geeignet für die Herstellung von Farben und Lacken, Kunstharzen, Klebstoffen und Dichtstoffen, insbesondere zur Einstellung und Kontrolle der Rheologie.

Die erfindungsgemäße wäßrige Dispersion ist geeignet für die Herstellung von Farben und Lacken, Kunstharzen, Klebstoffen und Dichtstoffen, insbesondere zur Verbesserung von deren mechanischen Eigenschaften wie zum Bespiel der Verbesserung der Kratzfestigkeit.

Die Vorteile der vorliegenden Erfindung sind, dass es erstaunlich und in keiner Weise durch den Fachmann vorauszusehen war, dass Feststoffdispersionen bestehend aus zwei oder mehr chemisch verschiedenen Partikelarten, Wasser und ggf. weiteren Stoffen den Nachteilen des Stands der Technik abhelfen.

Überraschenderweise wurde nun gefunden, dass bei Einsatz von mindestens zwei chemisch verschiedenen Partikelarten, die sich z.B. in ihrem isoelektrischen Punkt unterscheiden, Dispersionen mit sehr hohen Feststoffgehalten herstellen lassen, bei ausgezeichneter Stabilität gegen Vergelen und Sedimentation auch nach langer Lagerzeit.

Überraschenderweise wurde nun gefunden, dass sich durch Einsatz von zumindest zwei chemisch verschiedenen Partikelarten im Durchmesser von kleiner 100 µm Dispersionen mit sehr hohen Feststoffgehalten herstellen lassen, bei ausgezeichneter Stabilität gegen Vergelen und Sedimentation auch nach langer Lagerzeit.

Die Figuren zeigen:

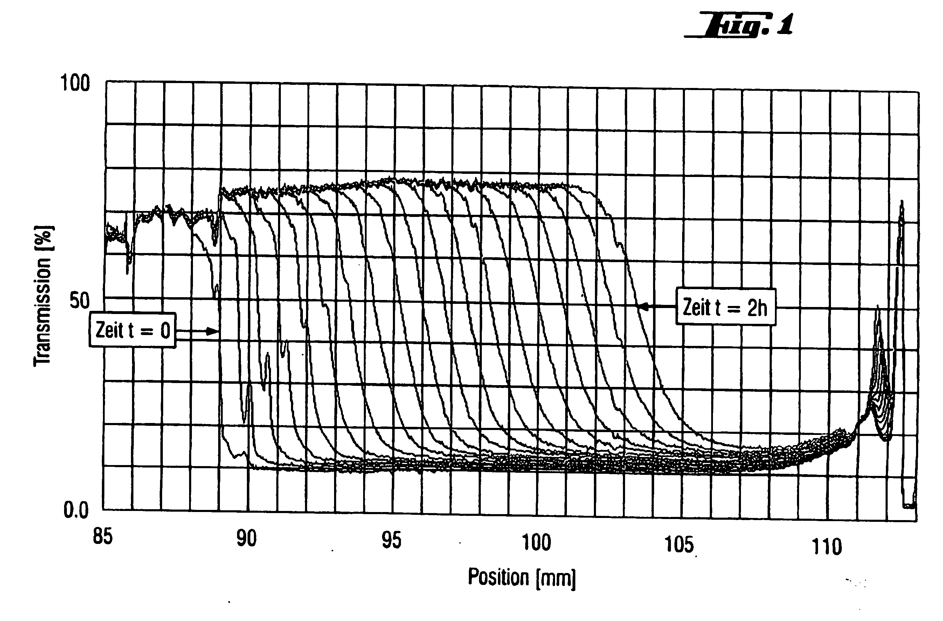

**Figur 1****:** Laserlicht-Transmissionsprofil aufgenommen mit der Lumifuge® (hierbei wird Sedimentation erzeugt durch Zentrifugieren mit einer Rotation entsprechend 3000 G; mittels eines Arrays von 2000 Dioden wird während des Zentrifuguierens die Sedimentation der Kieselsäure verfolgt über Laser-Licht-Transmission) .
   Abszisse (X-Achse): Längsachse des Zentrifugengläschens (links: Öffnung, rechts: Boden); Ordinate (Y-Achse): Transmission Licht in Prozent (%).
   Transmissionsprofil, aufgenommen mit der Lumifuge®, einer nicht erfindungsgemäßen Dispersion; Monodisperse Silica-Kugeln 220nm, Messdauer 18:30 min, Gravitationsfeld 3000 G: es ist die starke Sedimentation einer nicht-stabilen Dispersion zu beobachten.

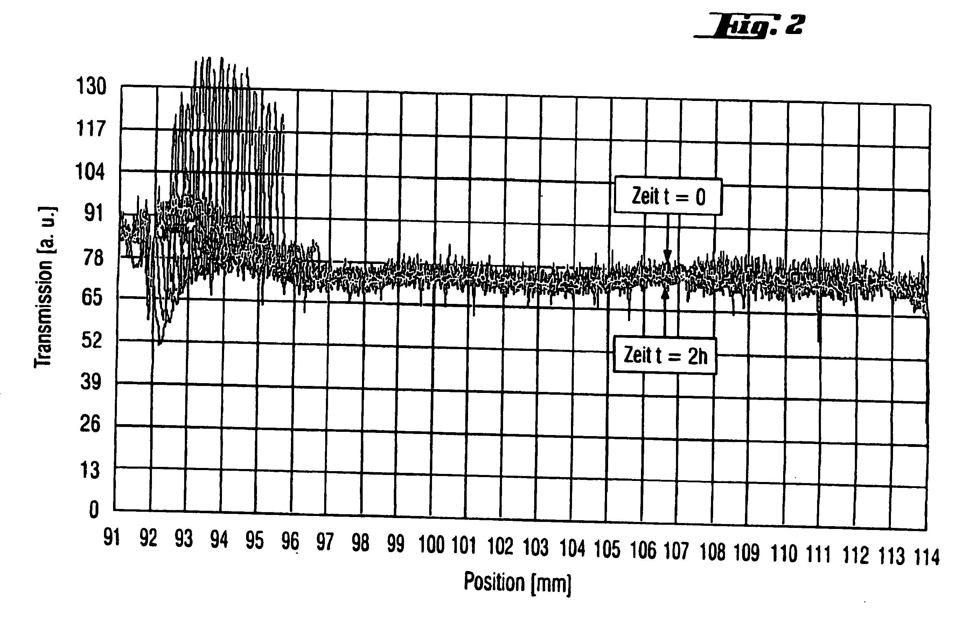

**Figur 2****:** Laserlicht-Transmissionsprofil aufgenommen mit der Lumifuge® (hierbei wird Sedimentation erzeugt durch Zentrifugieren mit einer Rotation entsprechend 3000 G; mittels eines Arrays von 2000 Dioden wird während des Zentrifuguierens die Sedimentation der Kieselsäure verfolgt über Laser-Licht-Transmission).
   Abszisse (X-Achse): Längsachse des Zentrifugengläschens (links: Öffnung, rechts: Boden); Ordinate (Y-Achse): Transmission Licht in Prozent (%).
   Transmissionsprofil, aufgenommen mit der Lumifuge®, einer erfindungsgemäßen Dispersion nach Beispiel 2; Messdauer 18:30 min, Gravitationsfeld 3000 G: es ist keine Sedimentation zu beobachten.

### Beispiele

### Beispiel 1

In einer diskontinuierlichen Apparatur werden bei einer Temperatur von 25 °C zu 830 kg Wasser, 0,5 kg pyrogen hergestelltes Aluminiumoxid mit einer spezifischen Oberfläche von 100 m²/g und einem Al₂O₃ Gehalt von größer als 99.6 Gew.% (gemessen an dem bei 1000 °C während 4 Stunden geglühtem Material) sowie 170 kg hydrophile Kieselsäure einer spezifischen Oberfläche von 300 m²/g (erhältlich unter dem Namen WACKER HDK T30 bei Wacker-Chemie GmbH, Burghausen, D) (wobei die spezifische Oberfläche jeweils nach der BET Methode nach DIN 66131 und 66132 gemessen wird) in kleinen Schritten zugefügt und dabei mit einer Rotor-Stator Dispergiereinheit Koruma während 8 Stunden dispergiert.

Es entsteht eine dünnflüssige weißliche wäßrige Dispersion mit einem Feststoffgehalt von 17 Gew.% und einem pH-Wert von pH 3,8. Die Dispersion ist für mehr als ein Jahr stabil gegen Sedimentation und Vergelen. Die Dispersion zeigt bei einem Schergefälle von 100 l/s und einer Temperatur von 25°C und gemessen mit einem Kegelplatte Rotationsviskosimeter der Fa. Haake, RheoStress 600, eine Viskosität von 120 mPas.
Die Dispersion zeigt ein Zetapotential von -25 mV, gemessen mittels Elektroakustic mit einem Gerät DT1200, der Fa. Dispersion Technologies.
Die Dispersion zeigt eine Leitfähigkeit von 0,05 mS/cm.

### Beispiel 2

In einer diskontinuierlichen Apparatur werden bei einer Temperatur von 25 °C zu 1760 g Wasser, 0,4 g pyrogen hergestelltes Aluminiumoxid mit einer spezifischen Oberfläche von 100 m²/g und einem Al₂O₃ Gehalt von größer als 99.6 Gew.% (gemessen an dem bei 1000 °C während 4 Stunden geglühtem Material) sowie 240 g hydrophile Kieselsäure einer spezifischen Oberfläche von 200 m²/g (erhältlich unter dem Namen WACKER HDK N20 bei Wacker-Chemie GmbH, Burghausen, D) (wobei die spezifische Oberfläche jeweils nach der BET Methode nach DIN 66131 und 66132 gemessen wird) in kleinen Schritten zugefügt und dabei mit einer Rotor-Stator Dispergiereinheit Unimix, Unimix, Fa. Ekato, D, während 12 h dispergiert.
Es entsteht eine dünnflüssige weißliche wäßrige Dispersion mit einem Feststoffgehalt von 12 Gew.% und einem pH-Wert von pH 3,9. Die Dispersion ist für mehr als ein Jahr stabil gegen Sedimentation und Vergelen. Die Dispersion zeigt bei einem Schergefälle von 100 l/s und einer Temperatur von 25°C und gemessen mit einem Kegelplatte Rotationsviskosimeter der Fa. Haake, RheoStress 600, eine Viskosität von 90 mPas.
Die Dispersion zeigt ein Zetapotential von -22 mV, gemessen mittels Elektroakustic mit einem Gerät DT1200, der Fa. Dispersion Technologies.
Die Dispersion zeigt eine Leitfähigkeit von 0,04 mS/cm.
Die Stabilität gegen Sedimentation wird dokumentiert durch Messung mit der durch optische Transmission kontrollierten Zentrifuge, Gerät Luminofuge®.

Siehe Figur 1 (nicht erfindungsgemäße Referenz) und Figur 2 erfindungsgemäßes Beispiel (2)

### Beispiel 3

In einer diskontinuierlichen Apparatur werden bei einer Temperatur von 25 °C zu 830 kg Wasser, 0,5 kg pyrogen hergestelltes Aluminiumoxid mit einer spezifischen Oberfläche von 100 m²/g und einem Al₂O₃ Gehalt von größer als 99.6 Gew.% (gemessen an dem bei 1000 °C während 4 Stunden geglühtem Material) sowie 170 kg hydrophile Kieselsäure einer spezifischen Oberfläche von 150 m²/g (erhältlich unter dem Namen WACKER HDK V15 bei Wacker-Chemie GmbH, Burghausen, D) (wobei die spezifische Oberfläche jeweils nach der BET Methode nach DIN 66131 und 66132 gemessen wird) in kleinen Schritten zugefügt und dabei mit einer Rotor-Stator Dispergiereinheit Koruma während 8 Stunden dispergiert.
Es entsteht eine dünnflüssige weißliche wäßrige Dispersion mit einem Feststoffgehalt von 15 Gew.% und einem pH-Wert von pH 3,9. Die Dispersion ist für mehr als ein Jahr stabil gegen Sedimentation und Vergelen. Die Dispersion zeigt bei einem Schergefälle von 100 l/s und einer Temperatur von 25°C und gemessen mit einem Kegelplatte Rotationsviskosimeter der Fa. Haake, RheoStress 600, eine Viskosität von 80 mPas.
Die Dispersion zeigt ein Zetapotential von -21 mV, gemessen mittels Elektroakustic mit einem Gerät DT1200, der Fa. Dispersion Technologies.
Die Dispersion zeigt eine Leitfähigkeit von 0,08 mS/cm.

## Patentansprüche

1. Wäßrige Dispersion, **dadurch gekennzeichnet, dass** sie zumindest zwei chemisch verschiedene Partikelarten im Durchmesser im mittleren von kleiner 100 µm, wobei sie als eine Partikelart eine Kieselsäure in einer Menge von größer 50 Gew.% bezogen auf den Festgehalt der Dispersion enthält und als zumindest zweite andere Partikelart ausgewählt aus organischen Harzen, Metalloxiden, beliebigen Mischungen aus diesen Oxiden, unlöslichen oder schwerlöslichen ionischen und mineralischen Verbindungen, schwerlöslichen nichtionischen Verbindungen, enthält, wobei die zweite Partikelart in einer Menge von 0,001 Gew.% bis 5 Gew.%, bezogen auf den Festgehalt der Dispersion, enthalten ist.

2. Wäßrige Dispersion nach Anspruch 1 **dadurch gekennzeichnet, dass** sich zumindest die isoelektrischen Punkte von zwei Partikelarten um mindestens eine halbe pH-Einheit unterscheiden.

3. Wäßrige Dispersion nach den Ansprüchen 1 oder 2, **dadurch gekennzeichnet, dass** ihre Leitfähigkeit kleiner 100 mS/cm ist.

4. Wäßrige Dispersion nach den Ansprüchen 1 bis 3, **dadurch gekennzeichnet, dass** die zumindest zwei Partikelarten auf der einen Seite jeweils Kieselsäure und auf der anderen Seite jeweils Partikel ausgewählt aus Aluminiumoxid, Boroxid, Zirkonoxid, Titanoxid, Zinkoxid, Ceroxid und Eisenoxid sind.

5. Wäßrige Dispersion nach den Ansprüchen 1 bis 3, **dadurch gekennzeichnet, dass** die zumindest zwei Partikelarten auf der einen Seite jeweils hydrophile Kieselsäure und auf der anderen Seite jeweils Partikelarten sind, die aus den Oberflächenmodifizierten Kieselsäuren ausgewählt sind.

6. Wäßrige Dispersion nach einem der Ansprüche 2-5, dadurch gekennzeicnet, dass die Kieselsäure pyrogene Kieselsäure ist.

7. Wäßrige Dispersion nach Anspruch 1, **dadurch gekennzeichnet, dass** ihr Gehalt an organischen Zuschlagstoffen kleiner als 5 Gew.% ist.

8. Druckmedium, **dadurch gekennzeichnet, dass** es durch Beschichtung mit Dispersion nach einem oder mehreren der Ansprüche 1 bis 6 hergestellt wird.

9. Verfahren zur Verwendung der wäßrigen Dispersion nach einem oder mehreren der Ansprüche 1 bis 6 zur Verdickung und Verstärkung von wäßrigen Beschichtungssystemen, Klebstoffen, Dichtstoffen und Verbundwerkstoffen, für chemisch mechanisches Planarisieren und Polieren von elektronischen und optischen Bauteilen, für das Beschichten von Papieren und Folien sowie um Komponenten für Korrosionsschutz von Metallen herzustellen.

## Claims

1. Aqueous dispersion, **characterized in that** it contains at least two chemically different particle types having a diameter on average of less than 100 µm, said dispersion containing a silicic acid in an amount greater than 50% by weight, based on the solids content of the dispersion, as one particle type and containing particles selected from organic resins, metal oxides, any desired mixtures of these oxides, insoluble or sparingly soluble ionic and mineral compounds, sparingly soluble non-ionic compounds as at least the second other particle type, the second particle type being present in an amount of from 0.001% by weight to 5% by weight, based on the solids content of the dispersion.

2. Aqueous dispersion according to Claim 1, **characterized in that** at least the isoelectric points of two particle types differ by at least half a pH unit.

3. Aqueous dispersion according to Claim 1 or 2, **characterized in that** its conductivity is less than 100 mS/cm.

4. Aqueous dispersion according to any of Claims 1 to 3, **characterized in that** the at least two particle types are firstly in each case silicic acid and secondly in each case particles selected from aluminium oxide, boron oxide, zirconium oxide, titanium oxide, zinc oxide, cerium oxide and iron oxide.

5. Aqueous dispersion according to any of Claims 1 to 3, **characterized in that** the at least two particle types are firstly in each case hydrophilic silicic acid and secondly in each case particle types which are selected from the surface-modified silicic acids.

6. Aqueous dispersion according to any of Claims 2-5, **characterized in that** the silicic acid is pyrogenic silicic acid.

7. Aqueous dispersion according to Claim 1, **characterized in that** its content of organic additives is less than 5% by weight.

8. Recording medium, **characterized in that** it is produced by coating with a dispersion according to one or more of Claims 1 to 6.

9. Method of using the aqueous dispersion according to one or more of Claims 1 to 6 for thickening and strengthening aqueous coating systems, adhesives, sealants and composite materials, for chemical mechanical planarization and polishing of electronic and optical components, for the coating of papers and films and for producing components for preventing corrosion of metals.

## Revendications

1. Dispersion aqueuse, **caractérisée en ce qu'**elle au moins deux types de particules chimiquement différents, avec un diamètre moyen inférieur à 100 µm, la dispersion contenant comme un type de particules une silice en une quantité supérieure à 50% en poids par rapport à la teneur en solides de la dispersion et, comme au moins un deuxième autre type de particules, des particules choisies parmi les résines organiques, les oxydes métalliques, les mélanges quelconques de ces oxydes, les composés insolubles ou peu solubles, ioniques et minéraux, les composés peu solubles non ioniques, le deuxième type de particules étant contenu en une quantité de 0,001% en poids à 5% en poids par rapport à la teneur en solides de la dispersion.

2. Dispersion aqueuse selon la revendication 1, **caractérisée en ce qu'**au moins les points isoélectriques de deux types de particules se distinguent d'au moins une demi-unité de pH.

3. Dispersion aqueuse selon la revendication 1 ou 2, **caractérisée en ce que** sa conductibilité est inférieure à 100 mS/cm.

4. Dispersion aqueuse selon les revendications 1 à 3, **caractérisée en ce que** lesdits au moins deux types de particules sont d'une part à chaque fois de la silice et d'autre part à chaque fois des particules choisies parmi l'oxyde d'aluminium, l'oxyde de bore, l'oxyde de zirconium, l'oxyde de titane, l'oxyde de zinc, l'oxyde de cérium et l'oxyde de fer.

5. Dispersion aqueuse selon les revendications 1 à 3, **caractérisée en ce que** lesdits au moins deux types de particules sont d'une part à chaque fois de la silice hydrophile et d'autre part à chaque fois des types de particules qui sont choisis parmi les silices à surface modifiée.

6. Dispersion aqueuse selon l'une quelconque des revendications 2 à 5, **caractérisée en ce que** la silice est une silice pyrogène.

7. Dispersion aqueuse selon la revendication 1, **caractérisée en ce que** sa teneur en additifs organiques est inférieure à 5% en poids.

8. Support d'impression, **caractérisé en ce qu'**il est produit par revêtement par la dispersion selon l'une ou plusieurs des revendications 1 à 6.

9. Procédé pour l'utilisation de la dispersion aqueuse selon l'une ou plusieurs des revendications 1 à 6 en vue de l'épaississement et du renforcement de systèmes de revêtement aqueux, d'adhésifs, de substances d'étanchéité et de matériaux composites, pour aplanir et polir chimico-mécaniquement des pièces électroniques et optiques, pour le revêtement de papiers et de feuilles ainsi que pour produire des composants pour la protection contre la corrosion de métaux.
